# EUROPÄISCHE PATENTANMELDUNG

(11) **EP 0 800 092 A2**
(43) Veröffentlichungstag der Anmeldung: **08.10.1997**
(21) Anmeldenummer: 97102074.8
(22) Anmeldetag: 10.02.1997
(51) Int. Cl.: G01S 5/14, G08G 1/127

(54) **Vorrichtung und Verfahren zur Zielführung eines Fahrzeuges**

(30) Priorität: 04.04.1996 DE 19614777
(71) Anmelder: ROBERT BOSCH GMBH, 70442 Stuttgart (DE)
(72) Erfinder: Bochmann, Harald, Dr., 30419 Hannover (DE); Vahle, Andreas, 31139 Hildesheim (DE)

(57) **Zusammenfassung**

Es wird ein Endgerät für die Zielführung eines Kraftfahrzeugs vorgeschlagen, welches ein GPS und ein GSM-Modul beinhaltet. Über das GSM-Modul kann es seine derzeitige Position und sein Ziel an einen Zentralrechner senden, und von diesem einen Routenvorschlag erhalten. Dieser Routenvorschlag wird im Endgerät gespeichert und schrittweise, nach Erreichen eines Teilziels an den Fahrzeugführer ausgegeben.

## Beschreibung

### Stand der Technik

Die Erfindung geht aus von einer Vorrichtung und einem Verfahren zur Zielführung eines Fahrzeugs nach der Gattung der unabhängigen Ansprüche.

Aus der Zeitschrift Funkschau 5/96, Seiten 74 ff ist schon eine Einrichtung zur Zielführung eines Fahrzeugs und ein Verfahren hierfür bekannt. Zu dieser Einrichtung gehören mehrere Vorrichtungen zur Standortbestimmung, ein Datenspeicher, eine Ein-/Ausgabeeinheit, sowie eine zentrale Prozessoreinheit, welche sich alle an Bord eines Fahrzeugs befinden. Die Standortbestimmung erfolgt einerseits durch GPS, ein Positionsbestimmungssystem, welches auf Satelliten basiert. Zur relativen Positionsbestimmung sind darüber hinaus Kompaß und Raddrehsensoren vorhanden. Über die Ein-/Ausgabeeinheit kann ein Ziel über Menüsteuerung eingegeben werden. In der Speichereinheit, einer CD-Rom, stehen elektronische Straßen- und Stadtpläne zur Verfügung, aus welchen die zentrale Prozessoreinheit einen Routenvorschlag für die beste Verbindung zwischen derzeitigem Standort und Ziel berechnet. Während der Zielanfahrt berechnet die zentrale Recheneinheit eine neue Route, sobald eine Abweichung vom Routenvorschlag erkannt wird.

Weiterhin ist aus den Bosch Technischen Berichten, Band 8, Seite 28 von 1986 ein System bekannt, bei dem ein Gebiet von einem Netz von Infrarotsendern, sogenannten Baken, überzogen ist. Jede Bake sendet fortwährend Informationen aus, auf welchem Weg bestimmte Ziele, insbesondere Baken in der Umgebung, erreichbar sind. Diese Information wird von vorbeifahrenden Fahrzeugen mittels eines an Bord befindlichen Infrarotempfängers aufgenommen. Ein ebenfalls an Bord des Fahrzeugs befindliches Endgerät rekonstruiert aus dem für alle Fahrzeuge gleichen Datenstrom die Route in die Nähe des gewünschten Ziels.

### Vorteile der Erfindung

Die erfindungsgemäße Vorrichtung mit den Merkmalen des Anspruchs 1 hat demgegenüber den Vorteil, daß sie deutlich weniger Komponenten, und somit auch einen niedrigeren Anschaffungspreis aufweist.

Das erfindungsgemäße Verfahren mit den Merkmalen des Anspruchs 5 hat den Vorteil, daß eine kostenaufwendige, neu zu erstellende Infrastruktur nicht benötigt wird, und es daher mit geringeren finanziellen Aufwendungen verbunden ist.

Durch die in den abhängigen Ansprüchen aufgeführten Maßnahmen sind vorteilhafte Weiterbildungen und Verbesserungen der im unabhängigen Anspruch angegebenen Vorrichtung möglich. Besonders vorteilhaft ist es, das satellitengestützte Positionsbestimmungssystem mittels GPS zu realisieren, sowie das drahtlose Kommunikationssystem als GSM-Gerät auszubilden, da beide Standards international verbreitet sind, und somit eine Nutzbarkeit auch auf Auslandsreisen möglich ist.

Weiterhin ist es besonders vorteilhaft, beim Erreichen eines Stützpunktes, sobald dies durch GPS bestätigt wird, das Erreichen des Stützpunkts, sowie den nächsten anzufahrenden Stützpunkt akustisch mitzuteilen, da hierdurch der Fahrer seine Aufmerksamkeit weitgehend dem Straßenverkehr widmen kann.

Weiterhin ist es besonders vorteilhaft, die vollständige Liste aller für die Route notwendigen Stützpunkte in der Vorrichtung zu speichern, da sie somit manuell abrufbar ist und die bisher zurückgelegte Route rekonstruierbar ist.

Weiterhin ist es besonders vorteilhaft, die Daten über Verkehrsbewegungen über einen Zentralrechner zu erfassen und zu speichern, da somit Zielfindungsfunktionen und Verkehrsmanagementfunktionen kombiniert werden können.

### Zeichnung

Ein Ausführungsbeispiel der Erfindung ist in der Zeichnung dargestellt und in der nachfolgenden Beschreibung erläutert. Es zeigen
Figur 1 den Aufbau einer erfindungsgemäßen Vorrichtung,
Figur 2 ein Ablaufdiagram, das die Arbeitsweise der Vorrichtung erläutert,
Figur 3 einen Routenvorschlag in Form einer Stützpunktliste.

### Beschreibung des Ausführungsbeispiels

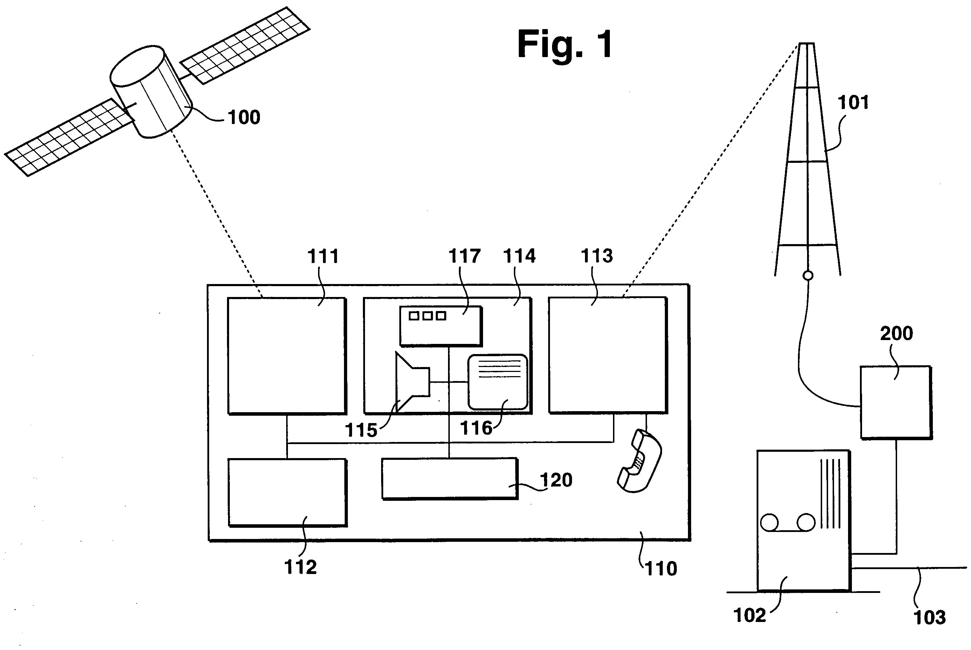

Figur 1 zeigt eine Vorrichtung 110, wie sie an Bord eines ans Ziel zu führenden Fahrzeugs installiert ist. Diese Vorrichtung 110 wird im weiteren Text auch Endgerät genannt, unabhängig von ihrer Realisierung in einem einzigen Gehäuse oder in getrennten Modulen. Das Endgerät 110 beinhaltet einen Speicher 112, eine zentrale Prozessoreinheit 120, eine Ein-/Ausgabeeinheit 114, eine drahtlose GSM- Funksende- und Empfangseinheit 113, welche im folgenden auch kurz GSM-System genannt wird, sowie ein satellitengestütztes GPS-Positionsbestimmungssystem 111, welches Ortungssignale von einem Satelliten empfängt. Die Komponenten 112, 120, 114, 113, und 111 sind durch einen Datenbus miteinander verbunden. Die Ein-/Ausgabeeinheit 114 enthält einen Bildschirm 116, eine Tastatur 117 und eine akustische Ausgabeeinheit 115. Durch das GSM-System 113, die GSM-Funkbasisstation 101 und die GSM-Netz-Vermittlungsstelle 200 steht das Endgerät 110 in Verbindung mit einem stationären Zentralrechner 102. Dieser ist in Figur 1 als getrennte Einheit dargestellt, jedoch ist es auch möglich, daß die GSM-Netz-Vermittlungsstelle 200 und der stationäre Zentralrechner 102 in demselben Gerät sind. Weiterhin ist am Zentralrechner 102 eine Datenleitung 103 angeschlossen. Diese steht im hier aufgeführten Beispiel stellvertretend für alle Kommunikationswege außer Verbindungen mit Endgeräten 110, über welche der Zentralrechner 102 Informationen über das Verkehrsgeschehen erhalten kann. Hierzu zählen insbesondere Funk, Polizei, manuelle Eingabe.

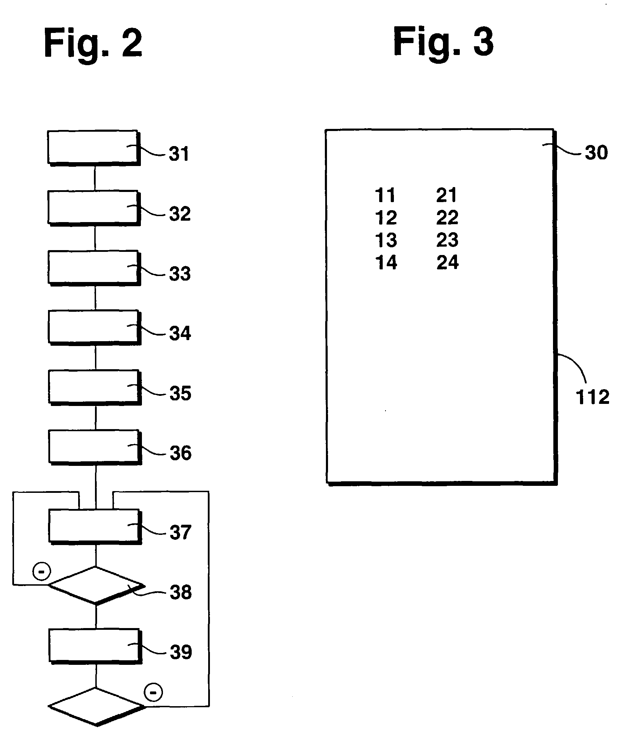

Die Funktionsweise des Endgeräts ist im Flußdiagramm in Figur 2 dargestellt. In Programmschritt 31 gibt ein Benutzer des Endgeräts ein Fahrziel über den Ein-/Ausgabeteil des Endgeräts ein. Dieses Fahrziel kann entweder in Koordinatenform (geographische Breite, geographische Höhe) oder in Adressenform eingegeben werden. Im vorliegenden Beispiel wird an der Stelle 31 des Programmablaufs BERLIN eingegeben. Im Schritt 32 wird über das GPS-Positionsbestimmungssystem wird die derzeitige Position in Koordinatenform festgestellt. Die derzeitige Position sei im vorliegenden Beispiel die geographische Lage von Stuttgart. Anschließend werden in Programmpunkt 33 das Fahrziel und die derzeitige Position zusammen an das GSM-System weitergegeben 33. Das GSM-Sytem sendet im folgenden Schritt 34 eine Nachricht, welche die derzeitige Position und das Fahrziel beinhaltet, über die Funkbasisstation an den stationären Zentralrechner. Der Zentralrechner hat Zugang zu Kenntnissen des Straßennetzes, vorzugsweise in Form einer elektronischen Straßenkarte. Beispielsweise kann diese mit Hilfe eines Peripheriegeräts wie eines CD-ROM- oder eines Magnetbandlaufwerks gespeichert sein. Ebenso verfügt er über Kenntnisse der aktuellen Verkehrslage über die Datenleitung. Hieraus berechnet er einen Routenvorschlag, den das Endgerät in Schritt 35 über das GSM-System empfängt. In Schritt 36 speichert das Endgerät diesen Routenvorschlag im Speicher.

Der Speicher 112 mit dem abgespeicherten Routenvorschlag 30 ist in Figur 3 dargestellt. Der Routenvorschlag 30 beinhaltet mehrere Einträge, welche im folgenden auch Stützpunktinformationen genannt werden. Als Stützpunkt wird ein anzufahrendes Zwischenziel bezeichnet. Im vorliegenden Beispiel besteht eine Stützpunktinformation aus den Koordinaten eines Stützpunkts in einer mit den vom GPS-Positionsbestimmungssystem gelieferten Daten vergleichbaren Form, sowie aus einer Stützpunktinstruktion, hier in Form von Sprachinformation, welche die Adresse des Stützpunkts sowie eventuell eine kurze Instruktion zur Weiterfahrt beinhaltet, und im Zentralrechner 102 synthetisiert wird. Im vorliegenden Beispiel ist in Figur 3 der Routenvorschlag 30 mit 4 Stützpunktinformationen dargestellt, wobei jede durch ein Zahlenpaar bezeichnet ist. Im vorliegenden Beispiel bezeichnet 11 die Koordinaten von Stuttgart, 12 die Koordinaten von Würzburg, 13 die Koordinaten von Hannover und 14 die Koordinaten von Berlin, also des Zielorts. Die Stützpunktinstruktion 21 bezeichnet die Sprachinformation SIE SIND IN STUTTGART. FAHREN SIE NACH WÜRZBURG, 22 WÜRZBURG. FAHREN SIE RICHTUNG HANNOVER, 23 HANNOVER. RICHTUNG BERLIN, 24 BERLIN. ZIEL ERREICHT.

Zur Beschreibung der weiteren Zielführung wird wieder auf Figur 2 Bezug genommen. In Schritt 37 bestimmt das GPS die aktuelle Position, welche in Schritt 38 mit den im Routenvorschlag enthaltenen Koordinaten der Stützpunkte verglichen wird. Wird eine Übereinstimmung festgestellt, erfolgt die Ausgabe 39 einer Stüzpunktinstruktion, andernfalls wird erneut die mit Schritt 37 bezeichnete Positionsbestimmung vorgenommen. Nach der Ausgabe 39 erfolgt eine Prüfung 40, ob die derzeitigen Koordinaten mit den Zielkoordinaten übereinstimmen. Im Übereinstimmungsfall ist die Zielführung beendet, andernfalls wird eine erneute Positionsbestimmung 37 initiiert.

Diese Funktionsweise wird mit Hilfe von Figur 3 nochmals konkretisiert. Ist der Verkehrsteilnehmer an Punkt mit den Koordinaten 11 angelangt, bewirkt dies die Ausgabe der zum Stützpunkt mit den Koordinaten 11 gehörigen Stützpunktinstruktion 21 an den Fahrzeugführer. Diese Ausgabe besteht im vorliegenden Beispiel aus der Wiedergabe der Sprachinformation 21: SIE SIND IN STUTTGART. FAHREN SIE NACH WÜRZBURG. Im vorliegenden Beispiel erfolgt die Ausgabe über den Lautsprecher der akustischen Ausgabeeinheit 115. Die Koordinaten des ersten Stützpunkts sind mit der Position zum Zeitpunkt der Initiierung der Zielführung identisch, daher erfolgt die Ausgabe des ersten Stützpunkts in der Regel unmittelbar nach Empfang des Routenvorschlags 30. Die Ausgabe der weiteren Sprachinformationen beinhaltenden Stützpunktinstruktionen 22, 23, 24 erfolgt, sobald die vom GPS-Positionsbestimmungssystem bestimmte Position jeweils mit Den Koordinaten 12, 13, 14 identisch ist. Die letzte Stützpunktinstruktion 24 im Routenvorschlag 30 beinhaltet die Mitteilung, daß der Verkehrsteilnehmer sich am Ziel befindet. Durch die mit GPS erreichbare Positionierungssicherheit ist nunmehr die Zielfindung für den Verkehrsteilnehmer unproblematisch.

Durch die dem GSM-Standard innewohnende Möglichkeit, sowohl Daten als auch Sprachen zu übertragen, ergeben sich mehrere Variationsmöglichkeiten bezüglich des Formats des Routenvorschlags 30. Abweichend vom oben gewählten Beispiel ist es auch denkbar, die Sprachsynthese im Endgerät vorzunehmen, welches dann zwar aufwendiger in der Herstellung wird, dafür jedoch mit kürzeren Datenübertragungszeiten zur Übermittlung des Routenvorschlags 30 zwischen Zentralrechner 102 und GSM-System 113 auskommen kann.

In einer weiteren Abwandlung des Ausführungsbeipiels ist es denkbar, die Sprachsynthese im stationären Zentralrechner durch einen Operator zu ersetzen, welcher den vom Rechner berechneten Routenvorschlag vorliest, und darüber hinaus auch für interaktiv zu bearbeitende Sonderwünsche zur Verfügung steht.

Die zentrale Berechnung des Routenvorschlags für viele Verkehrsteilnehmer erlaubt eine Verfeinerung des Verfahrens zur Zielfindung auf vielerlei Arten. Da der Zentralrechner Routenvorschläge für mehrere Verkehrsteilnehmer ausarbeitet, verfügt er über Informationen bezüglich der momentanen Verkehrsdichte, aber auch bezüglich der zu erwartenden Verkehrsdichte. Beides kann in geeigneter Weise in die Berechnung des Routenvorschlags einfließen. Weiterhin können für einen optimierten Routenvorschlag auch andere Verkehrsinformationen verwendet werden. Beispielsweise können Stauinformationen oder Informationen über vorübergehende Änderungen im Straßennetz, wie beispielsweise durch eine Baustelle, über Datenleitung an den Zentralrechner geliefert werden, ebenso ist eine manuelle Eingabe von Verkehrsinformationen am Zentralrechner möglich.

Ebenso ergeben sich Weiterentwicklungsmöglichkeiten für den Fall der Nichtbeachtung von Routenvorschlägen. Schon vom Endgerät wiedergegebene Teile des Routenvorschlags 30, wie beispielsweise im vorliegenden Beispiel die Instruktion, am Stützpunkt 11 die Richtung 21 einzuschlagen, können vom Verkehrsteilnehmer nochmals aus dem Speicher 112 zurückgerufen werden. Somit kann der Verkehrsteilnehmer eine unbeabsichtigte Abweichung vom Routenvorschlag rekonstruieren und gegebenenfalls korrigieren. Weiterhin ist es möglich, daß das Endgerät 110 selbständig bei einer Abweichung vom Routenvorschlag 30 die Berechnung eines neuen Routenvorschlags durch den Zentralrechner 102 initiiert.

Schließlich besteht eine weitere Weiterentwicklung darin, auf längeren Strecken in zeitlich wiederkehrenden Abständen eine Neuberechnung des Routenvorschlags zu initiieren, um somit jeweils neueste Verkehrsdichteinformationen in den Routenvorschlag einfließen zu lassen.

## Patentansprüche

1. Vorrichtung zur Zielführung eines Fahrzeugs mit einem Funksende- und Empfangsgerät und mit einem satellitengestützten Positionsbestimmungssystem im Fahrzeug, dadurch gekennzeichnet, daß Mittel zur Eingabe eines Fahrziels vorhanden sind, daß das Fahrziel zusammen mit dem über das satellitengestützte Positionsbestimmungssystem bestimmten Standort über das Funksende- und Empfangsgerät aussendbar ist, daß aufgrund der ausgesandten Information ein in der Vorrichtung zu speichernder Routenvorschlag, der die Koordinaten von Stützpunkten, welche auf dem Weg liegen, sowie von Stützpunktinstruktionen, welche zusätzliche Informationen über einen Stützpunkt enthalten, beinhaltet, empfangbar ist, und daß die Ausgabe der Stützpunktinstruktion durch das satellitengestützte Positionsbestimmungssystem steuerbar ist, indem das Erreichen eines Stützpunktes die Ausgabe einer bisher noch nicht ausgegeben Stützpunktinstruktion bewirkt.

2. Endgerät nach Anspruch 1, dadurch gekennzeichnet, daß das satellitengestützte Positionsbestimmungssystem ein GPS ist.

3. Endgerät nach Anspruch 1 oder 2, dadurch gekennzeichnet, daß das Funksende- und Empfangsgerät ein GSM-Gerät ist.

4. Endgerät nach einem der Ansprüche 1 bis 3, dadurch gekennzeichnet, daß die Ausgabe der Stützpunktinstruktion akustisch und/oder optisch erfolgt.

5. Verfahren zur Zielführung eines Fahrzeugs, dadurch gekennzeichnet, daß von einem im Fahrzeug befindlichen Positionsbestimmungssystem die momentane Position erfaßt wird und über eine Funksende- und Empfangseinrichtung zusammen mit einem Fahrziel einem ortsfesten Zentralrechner mitgeteilt wird, durch welchen die empfangenenen Standortinformationen und das Fahrziel mit einer elektronischen Straßenkarte verglichen werden und eine günstigste Fahrtroute ermittelt wird, diese Information in Form eines Routenvorschlags, welcher die Koordinaten von anzufahrenden Stützpunkten, sowie Stützpunktinstruktionen, welche zusätzliche Informationen zu bestimmten Stützpunkten enthalten, beinhaltet, über das Funksende- und Empfangsgerät an das Fahrzeug übertragen wird, daß dieser Routenvorschlag gespeichert wird, daß durch das satellitengestützte Positionsbestimmungssystem fortlaufend die Koordinaten des Fahrzeugstandortes ermittelt werden, und daß eine weitere Stützpunktinstruktion aus dem Speicher dann ausgegeben wird, wenn die Koordinaten des Fahrzeugstandortes mit den Koordinaten eines zuvor noch nicht erreichten Stützpunktes übereinstimmen.

6. Verfahren nach Ansprüchen 5, dadurch gekennzeichnet, daß im Zentralrechner die Summe aller eingehenden Positionsinformationen und Zielwünsche in einem Verkehrsdichtehistogramm verarbeitet wird und für die Erstellung des Routenvorschlags verarbeitet wird.

7. Verfahren nach einem der Ansprüche 5-6, dadurch gekennzeichnet, daß im Zentralrechner Verkehrsinformationen, insbesondere über Staus, Baustellen und Verkehrsgefährdungen für die Erstellung eines optimierten Routenvorschlags verwendet werden.

8. Verfahren nach einem der Ansprüche 5-7, dadurch gekennzeichnet, daß bei Abweichungen von dem vorgegeben Routenvorschlag die Erstellung eines neuen Routenvorschlags, basierend auf aktualisierten Positions- und Verkehrsdaten initiiert wird.

9. Verfahren nach einem der Ansprüche 5-8, dadurch gekennzeichnet, nach einer vorgegebenen Strecke und/oder Zeit die Erstellung eines neuen Routenvorschlags, basierend auf aktualisierten Positions- und Verkehrsdaten initiiert wird.
